# EUROPÄISCHE PATENTSCHRIFT

(11) **EP 0 623 406 B1**
(45) Veröffentlichungstag und Bekanntmachung des Hinweises auf die Patenterteilung: **23.12.1998**
(21) Anmeldenummer: 94106454.5
(22) Anmeldetag: 26.04.1994
(51) Int. Cl.: B21D 43/20, B65G 54/02

(54) **Vorrichtung zum Übernehmen und Weiterleiten von Behälterdeckeln aus ferromagnetischem Material**
Device for transferring and forwarding container covers made of ferromagnetic material
Dispositif pour transférer et manutentionner des couvercles de récipients en matériau ferromagnétique

(30) Priorität: 07.05.1993 DE 4315307
(43) Veröffentlichungstag der Anmeldung: 09.11.1994
(73) Patentinhaber: Krupp Kunststofftechnik GmbH, 45143 Essen (DE)
(72) Erfinder: Sommer, Walter, D-45145 Essen (DE); Dirks, Klaus-Peter, D-47445 Moers (DE); Lange, Wilhelm, D-45149 Essen (DE)

(56) Entgegenhaltungen:
- EP-A- 0 331 967
- EP-A- 0 552 752
- DE-A- 3 336 151
- DE-A- 3 411 902
- DE-A- 4 038 841

## Beschreibung

Die Erfindung betrifft eine Vorrichtung zum Übernehmen von Behälterdeckeln oder Ronden aus ferromagnetischem Material von einer ersten Fertigungseinheit und zum Zuführen an eine weitere Fertigungseinheit mit einer Speicherstrecke mit zwei parallel angeordneten Magnetanordnungen zu beiden Seiten einer senkrechten Symmetrieebene, wobei bei der Verwendung der Vorrichtung der lichte Abstand der Magnetanordnungen im wesentlichen dem Außendurchmesser der Deckel entspricht, mindestens einer Einrichtung zum Übernehmen der Deckel von der ersten Fertigungsrichtung und zum senkrechten Eingeben der Deckel in die Speicherstrecke und einer Einrichtung zum Entnehmen der Deckel aus der Spreicherstrecke und zum Zuführen in die weitere Fertigungseinheit.

Eine gattungsgemäße Vorrichtung ist aus der DE-A-3336151 bekannt.

Als Behälterdeckel werden dabei auch schon Ronden als deren erstes Herstellungsstadium angesehen.

Von einer Presse gestanzte Deckel weisen i. allg. einen "angekippten" Rand auf. Zur Weiterverarbeitung werden sie einem Anroller zugeführt.

Bei Pressen mit nur zwei Deckelwerkzeugen wird jeder Deckel durch einen gesonderten Führungskanal ("Führungsbahn") geschickt, dort in seiner Ebene um 90° gedreht und einem Scheibenanroller zugeführt. Bei Scheibenanrollern kann der Deckel jederzeit eintreten. Es bestehen keinerlei Taktprobleme.

Bei Pressen mit mehr als zwei Werkzeugen, sog. Multidie- oder Vielfachpressen, fallen mit jedem Hub entsprechend viele Deckel an. Zwar besteht die Möglichkeit, jedem Deckelwerkzeug einen eigenen Scheibenanroller zuzuordnen. Jedoch würde dies eine sehr große Anlage ergeben.

Abgesehen davon erfüllen moderne Deckelanroller mit einem um eine senkrechte Achse drehenden Mehr-Stationen-Maschinenkopf höhere Qualitätsanforderungen hinsichtlich der Anrollung der Deckel und sind außerdem in der Lage, selbst die von einer Vielfachpresse pro Zeiteinheit abgegebene große Stückzahl von Deckeln anzurollen, wobei diese Maschinen Deckel allerdings nur taktweise annehmen können.

Aus der DE-A-33 36 151 ist ein senkrechtes Spreizmagnet-Puffermagazin und eine Vorrichtung zum Zuführen vereinzelter scheibenförmiger, aus ferromagnetischem Werkstoff bestehender Elemente zu dem Puffermagazin bekannt. Bei der bekannten Vorrichtung werden Deckel von einem Ende eines waagerechten Deckelstrangs vereinzelt und über ein waagerechtes Förderband dem oberen Ende des Puffermagazins zugeführt. Aus dem Puffermagazin können die scheibenförmigen Elemente für einen weiteren Verwendungszweck entnommen und z. B. einer Gummiermaschine zugeführt werden.

Der Erfindung liegt nun die Aufgabe zugrunde, eine Vorrichtung der eingangs genannten Art zu schaffen, mit der eine Vielzahl in der Zeiteinheit anfallender Deckel an eine Fertigungseinheit taktweise zugeführt werden können.

Diese Aufgabe wird dadurch gelöst, daß die Speicherstrecke im wesentlichen waagerecht angeordnet und mit je einer Begrenzung in Längsrichtung versehen ist, daß die der Einrichtung zum Zuführen der Deckel in die weitere Fertigungseinheit benachbarte Begrenzung der Speicherstrecke als fester Anschlag ausgebildet ist und daß die der Einrichtung zum Zuführen der Deckel in die weitere Fertigungseinrichtung gegenüberliegende Begrenzung als in Längsrichtung der Speicherstrecke beweglich geführter Anschlag ausgebildet ist.

Die Speicherstrecke ermöglicht es, einen Strom von Deckeln (Deckel/Zeiteinheit) unabhängig von der von der Leistungsfähigkeit der weiteren Fertigungseinheit (Deckel/Zeiteinheit) aufzunehmen. Die Deckel können durch die Magnetkraft der Magnetanordnungen in der Speicherstrecke in einem Schwebezustand gehalten werden, in dem die Deckel zudem einen etwa gleichen Abstand zueinander aufweisen. Dabei kommt der lichte Abstand der Magnetanordnungen so dicht wie möglich an den Außendurchmesser der Deckel heran, wobei jedoch ein solches Spiel vorgesehen ist, daß die Deckel reibungs- und kraftfrei durch die Speicherstrecke bewegt werden können. Mit einer zusätzlichen Einrichtung werden die Deckel senkrecht in die Speicherstrecke eingegeben, wobei die einfallenden Deckel - bedingt durch die Magnetkräfte - automatisch zwischen jeweils zwei in der Schwebe befindliche Deckel fallen. Die an den Enden der Speicherstrecke befindlichen Begrenzungen erlauben bei einer vorgebbaren Menge von Deckeln eine kalkulierbare Deckeldichte (Abstand/Deckel) im Speicher und damit eine präzise Entnahme jedes Deckels. Die gesamte Vorrichtung besitzt eine weitere Einrichtung zur Entnahme der Deckel aus der Speicherstrecke und zum Zuführen in die weitere Fertigungseinheit.

Die Magnetanordnungen sind im wesentlichen waagerecht angeordnet. Das bedeutet, daß sie vorzugsweise waagerecht verlaufen, in Abweichung davon jedoch auch eine geringe Steigung aufweisen können.

Damit die Deckel zur Entnahme aus der Speicherstrecke präzise erfaßt werden können, ist vorgesehen, den Anschlag am Ende der Speicherstrecke fest auszubilden.

Wenn sich die Anzahl der Deckel innerhalb der Speicherstrecke ändert, ändert sich entsprechend der gegenseitige Abstand der Deckel. Um diesen Abstand in vorgebbaren Grenzen zu halten, ist vorgesehen, den Anschlag am Anfang der Speicherstrecke veränderlich anzuordnen, um damit die wirksame Länge der Speicherstrecke zu verändern. Zweckmäßigerweise wird dieser Anschlag durch einen Linearantrieb bewegt, der einerseits durch Schalter steuerbar ist, die die Anzahl der in die Speicherstrecke einfallenden Deckel und die Anzahl der aus der Speicherstrecke entnommenen Deckel zählen. Alternativ kann der Abstand der beiden letzten Deckel in der Speicherstrecke als Maß für die Steuerung des Linearantriebs herangezogen werden.

Um die Speicherstrecke mit einem möglichst günstigen Kraftfeld zu betreiben, bestehen die Magnetanordnungen jeweils aus zur senkrechten Symmetrieebene offenen U-förmigen Magneten, die jeweils vorzugsweise aus zwei übereinander angeordneten, von einer Leiste aus antimagnetischem Werkstoff voneinander getrennten und rückwärtig durch eine Jochplatte miteinander verbundenen Reihen von Magneten, insbesondere Dauermagneten, bestehen, wobei spiegelbildlich zur senkrechten Symmetrieebene angeordnete und über- bzw. untereinander angeordnete Magnete entgegengesetzte Polrichtung aufweisen.

Um die notwendige Magnetkraft auch für große und schwere Deckel aufzubringen, kann jede Reihe von Magneten vorzugsweise als Doppelreihe mit zwei - in Querrichtung gesehen - hintereinander angeordneten Magneten ausgebildet sein.

Um den Deckeln ein möglichst kraft- und reibungsarmes Passieren der Speicherstrecke zu ermöglichen, ist zusätzlich vorgesehen, die Magnetanordnungen zumindest an ihrer der senkrechten Symmetrieebene zugewandten Seite von einem Blech aus antimagnetischem Material mit reibungsarmer, glatter Oberfläche abzudecken, wobei sich der lichte Abstand zum Passieren der Deckel in diesem Fall auf die Bleche bezieht.

Zur präzisen Entnahme der Deckel aus der Speicherstrecke ist weiter vorgesehen, die Einrichtung zum Entnehmen der Deckel als senkrecht zwischen den Magnetanordnungen laufendes Band mit hakenförmigen Mitnehmern auszubilden.

Obwohl ein synchrones Zuführen der Deckel in die weitere Fertigungseinheit in verschiedener Weise bewerkstelligt werden kann, ist nach einer vorteilhaften Weiterbildung der Erfindung vorgesehen, den Antrieb der Einrichtung zur Entnahme der Deckel aus der Speicherstrecke getriebetechnisch mit dem Antrieb der weiteren Fertigungseinheit zu verbinden.

Ein Ausführungsbeispiel der Vorrichtung ist in der Zeichnung zum Teil stark vereinfacht dargestellt und wird im folgenden näher erläutert. Es zeigen
- Fig. 1: ein Ausführungsbeispiel einer erfindungsgemäßen Vorrichtung in einer Seitenansicht,
- Fig. 2: die Vorrichtung in einer entsprechenden Draufsicht,

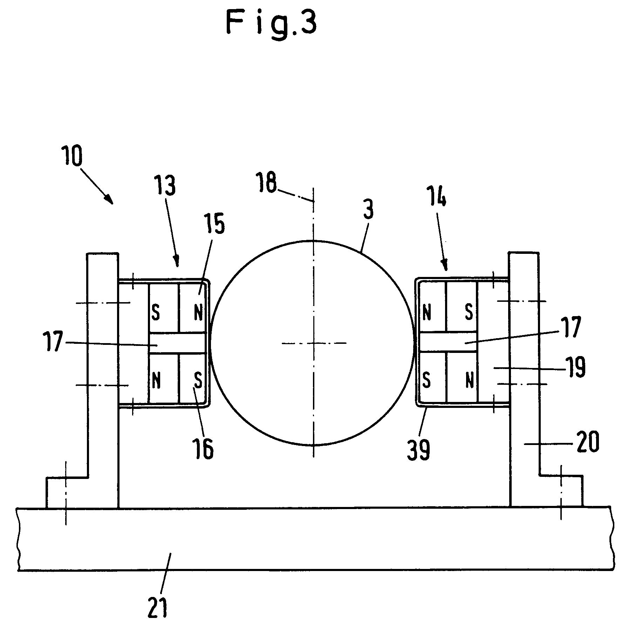

- Fig. 3: die Speicherstrecke in einem Querschnitt,
- Fig. 4: das Ende der Speicherstrecke in einem senkrechten Längsschnitt und
- Fig. 5: das Ende der Speicherstrecke in einem waagerechten Längsschnitt.

Die aus den Werkzeugen 1 einer Presse 2 ausgestanzten Deckel 3 werden nach jedem Pressenhub über Gleitbleche 4, 5 auf Abrollbänder 6, 7 unterschiedlicher Länge gegeben, deren Obertrume in bekannter Weise mit Magneten unterlegt sind, um die Deckel sicher zu führen.

Das längere Abförderband 6 wird über ein Umlenkrad 8 nach unten zu einer Speicherstrecke 10 umgelenkt. Das kürzere Abförderband 7 gibt seine Deckel über ein ansteigendes Zwischenband 11 auf ein Umlenkband 12 ab, das ebenfalls über ein Umlenkrad 8' schräg nach unten zur Speicherstrecke 10 umgelenkt wird. Parallel zu den senkrecht nach unten gehenden Teilen der Bänder können zusätzliche Führungen 9 für die Deckel 3 vorgesehen sein.

Die Speicherstrecke 10 weist zwei seitliche Magnetanordnungen 13, 14 auf, deren lichter Abstand im wesentlichen einem Deckeldurchmesser zuzüglich einem Spiel zur ungehinderten Längsbewegung der Deckel entspricht. Jede Magnetanordnung 13, 14 weist zwei übereinander angeordnete Doppelreihen 15, 16 von Dauermagneten auf, die jeweils durch eine Leiste 17 aus antimagnetischem Werkstoff voneinander getrennt sind. Die Magnetreihen 15, 16 und die Leisten 17 jeder Seite sind an Flachprofilen 19 aus magnetisierbarem Werkstoff befestigt, die wiederum über Halter 20 an einem Basisgestell 21 abgestützt sind.

Die Magneten der oberen Reihen 15 weisen jeweils mit ihrem Nordpol zur gemeinsamen senkrechten Mittelebene 18, die Magneten der unteren Reihen 16 mit ihrem Südpol. Das Flachprofil 19 dient in bezug auf die Magnetreihen 15, 16 als Jochplatte, so daß insgesamt die Wirkung einer U-förmigen Magnetanordnung gegeben ist.

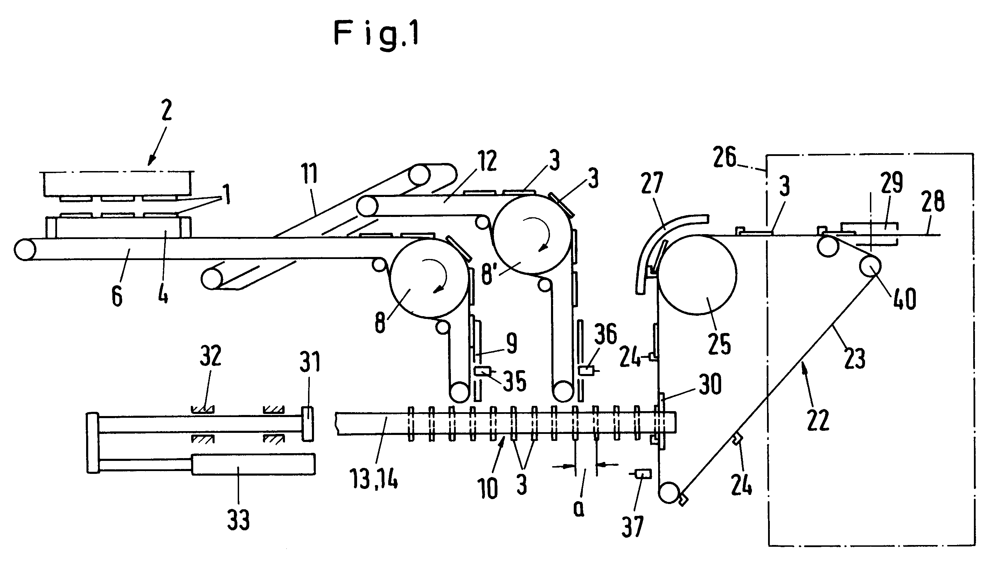

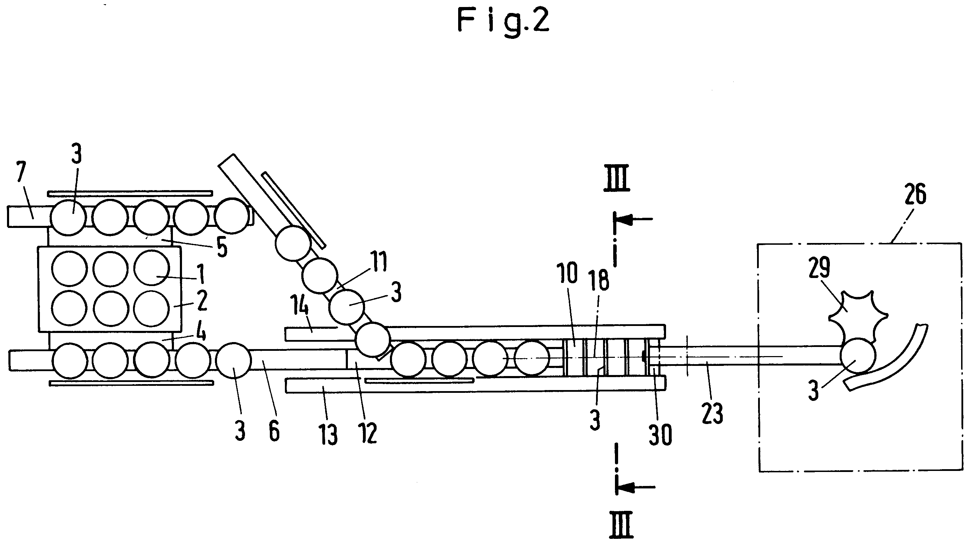

Am Ende der Speicherstrecke 10 ist ein Abförderband 22 mit einem umlaufenden Gurtband 23 mit hakenförmigen Mitnehmern 24 angeordnet. Der Gurt 23 ist zwischen den Magnetanordnungen 13, 14 senkrecht nach oben geführt und wird über der Speicherstrecke 10 über ein Umlenkrad 25 umgelenkt und zum Beispiel in einen in den Fig. 1 und 2 angedeuteten Bördelautomaten 26 eingeführt. Um die Deckel 3 beim Umlenken sicher zu führen, sind um das Umlenkrad 25 äußere Führungen 27 vorgesehen.

Im Bördelautomaten 26 ist für die Deckel 3 eine eigene Führung bzw. Auflageebene 28 und ein Einlaufstern 29 zum Übernehmen der Deckel vorgesehen.

An dem dem Bördelautomaten 26 benachbarten Ende der Speicherstrecke 10 befindet sich ein fester Anschlag 30 in Form zweier seitlicher, parallel zum Gurtband 23 angeordnete Leisten 30a, 30b.

An dem von dem Bördelautomaten 26 abgewandten Ende ist ebenfalls ein Anschlag 31 zwischen beiden Magnetanordnungen 13, 14 vorgesehen, der eine den Deckeln 3 angepaßte rotationssymmetrische Form aufweist. Der Anschlag 31 ist innerhalb der Speicherstrecke zur Veränderung von dessen wirksamer Länge in Führungen 32 verschiebbar gelagert und durch einen Linearantrieb 33 in seiner Lage verstellbar.

Zwischen den Magnetanordnungen 13, 14 befindliche Deckel 13 werden von beiden Anordnungen gleich angezogen und befinden sich so zwischen Ihnen in der Schwebe. Die dort befindlichen Deckel 3 sind alle gleich gepolt und stoßen sich gegenseitig ab. Dadurch weisen sie zueinander einen Abstand auf, der sich aus der verfügbaren Länge der Speicherstrecke 10 und der Anzahl der in ihr befindlichen Deckel ergibt. Von dem Abförderband 6 und dem Umlenkband 12 von oben in die Speicherstrecke 10 einfallende Deckel werden durch die herrschenden magnetischen Kräfte automatisch zwischen zwei Deckel eingefügt, wobei sich der gegenseitige Abstand der Deckel mit jedem zusätzlich in die Speicherstrecke eintretenden Deckel entsprechend verringert.

Ein solcher Mindestabstand wird z. B. für das Abfördern bzw. Entnehmen der Deckel 3 durch die an dem Abförderband 22 befindlichen Haken 24 benötigt, um sicherzustellen, daß jeweils nur ein Deckel abgezogen wird.

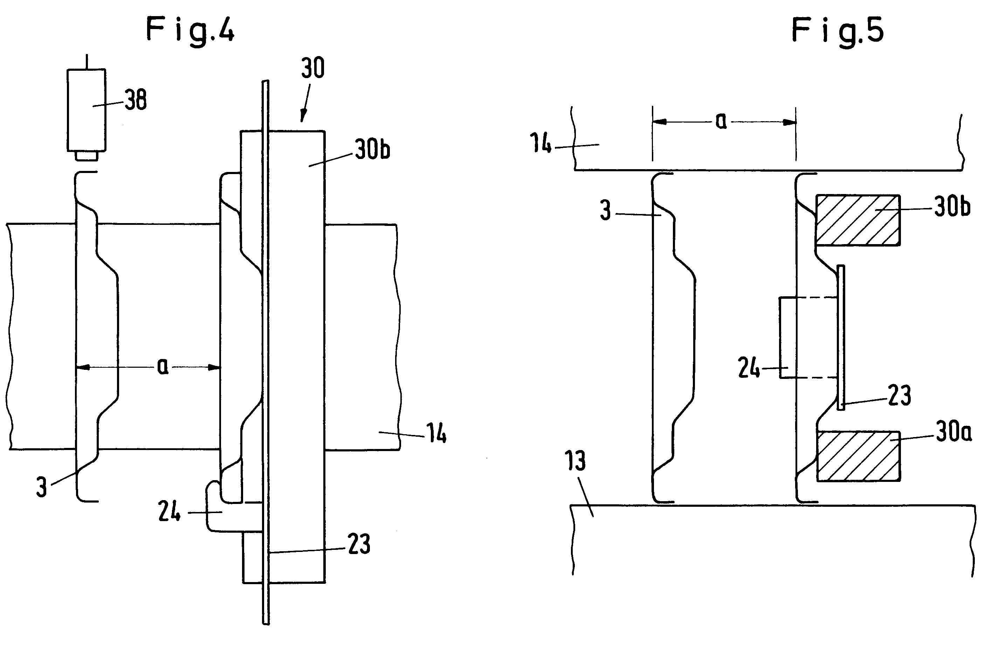

Um den betrieblich günstigsten kleinsten axialen Deckelabstand a (Fig. 4) einzuhalten, kann die Länge der Speicherstrecke 10 durch Verfahren des beweglichen Anschlags 31 durch den Linearantrieb 33 mit steigender Zahl der in der Speicherstrecke befindlichen Deckel verändert werden. Zu diesem Zweck sind an den senkrechten Zweigen des Abförderbandes 6 und des Umlenkbandes 12 Impulszähler 35, 36 angeordnet, die jeden in die Speicherstrecke 10 einfallenden Deckel erfassen. Diese Impulszähler können entweder auf der Basis von Schaltern oder Lichtschranken arbeiten. Um die aus der Speicherstrecke 10 entnommenen Deckel zu erfassen, ist ein weiterer Impulszähler 37 derart angeordnet, daß die Haken 24 des Abförderbandes 22 erfaßt werden. Alternativ können die abtransportierten Deckel auch unmittelbar im Bereich des Abförderbandes 22 durch einen Impulszähler erfaßt werden. Aus der Anzahl der Impulse der Geber 35 bis 37 in einer zu Zahlbeginn in der Speicherstrecke 10 vorhandenen Anzahl von Deckeln ergibt sich die jeweils aktuelle Deckelzahl.

Anstatt die Anzahl der Deckel in der Speicherstrecke 10 zu ermitteln und den Abstand zwischen den Deckeln unter Einbeziehung der akuten Länge der Speicherstrecke 10 zu errechnen, kann der Abstand der Deckel alternativ auch durch Bestimmen der Lage des jeweils vorletzten Deckels durch einen Sensor 38 (Fig. 4) ermittelt werden.

Um den Deckeln in der Speicherstrecke 10 ein ungehindertes Nachrücken zu ermöglichen, sind die Magnete der Reihen 15, 16 mit einem glatten Deckblech 39 aus antimagnetischem, nichtrostendem Stahl umgeben.

Um eine präzise Übergabe der Deckel an den Einlaufstern 29 des Bördelautomaten 26 zu erreichen, ist der Antrieb des Abförderbandes 22 z. B. am Umlenkrad 40 getriebetechnisch mit dem Antrieb des Einlaufsterns 29 verbunden.

Anstatt alle Deckel 3 der Presse 2 in eine einzige Speicherstrecke 10 zu führen, können die Abförderbänder 6, 7 ihre Deckel 3 auch jeweils über eine eigene Speicherstrecke in einen Bördelautomaten geben.

## Patentansprüche

1. Vorrichtung zum Übernehmen von Behälterdeckeln oder Ronden (3) aus ferromagnetischem Material von einer ersten Fertigungseinheit (2) und zum Zuführen an eine weitere Fertigungseinheit (26) mit
- einer Speicherstrecke (10) mit zwei parallel angeordneten Magnetanordnungen (13, 14) zu beiden Seiten einer senkrechten Symmetrieebene (18), wobei bei der Verwendung der Vorrichtung der lichte Abstand der Magnetanordnungen (13, 14) im wesentlichen dem Außendurchmesser der Deckel (3) entspricht,
- mindestens einer Einrichtung (6, 7) zum Übernehmen der Deckel (3) von der ersten Fertigungsrichtung (2) und zum senkrechten Eingeben der Deckel (3) in die Speicherstrecke (10) und
- einer Einrichtung (22) zum Entnehmen der Deckel (3) aus der Speicherstrecke (10) und zum Zuführen in die weitere Fertigungseinheit (26),
dadurch gekennzeichnet,
- daß die Speicherstrecke (10) im wesentlichen waagerecht angeordnet und mit je einer Begrenzung (30, 31) in Längsrichtung versehen ist,
- daß die der Einrichtung (22) zum Zuführen der Deckel (3) in die weitere Fertigungseinheit (26) benachbarte Begrenzung (30) der Speicherstrecke (10) als fester Anschlag ausgebildet ist und
- daß die der Einrichtung (22) zum Zuführen der Deckel in die weitere Fertigungseinrichtung (26) gegenüberliegende Begrenzung (31) als in Längsrichtung der Speicherstrecke (10) beweglich geführter Anschlag ausgebildet ist.

2. Vorrichtung nach Anspruch 1, dadurch gekennzeichnet, daß die Magnetanordnungen (13, 14) jeweils aus zur senkrechten Symmetrieebene (18) offenen U-förmigen Magneten bestehen.

3. Vorrichtung nach Anspruch 2, dadurch gekennzeichnet, daß die U-förmigen Magnete jeweils aus zwei übereinander angeordneten, von einer Leiste (17) aus antimagnetischem Werkstoff voneinander getrennten und rückwärtig durch eine Jochplatte (19) miteinander verbundenen Reihen (15, 16) von Magneten bestehen, wobei spiegelbildlich zur senkrechten Symmetrieebene (18) angeordnete und senkrecht über- bzw. untereinander angeordnete Magnete entgegengesetzte Polrichtung aufweisen.

4. Vorrichtung nach Anspruch 3, dadurch gekennzeichnet, daß jede Reihe (15, 16) von Magneten als Doppelreihe mit zwei - im Querschnitt gesehen - hintereinander angeordneten Magneten ausgebildet ist.

5. Vorrichtung nach einem der Ansprüche 1 bis 4, dadurch gekennzeichnet, daß die Magnetanordnungen (13, 14) zumindest an ihrer der senkrechten Symmetrieebene (18) zugewandten Seite von einem Blech (39) aus antimagnetischem Material mit reibungsarmer Oberfläche abgedeckt sind, wobei der lichte Abstand zum Passieren der Deckel (3) durch die Bleche (39) gegeben ist.

6. Vorrichtung nach einem der Ansprüche 1 bis 5, dadurch gekennzeichnet, daß der bewegliche Anschlag (31) durch einen Linearantrieb (33) bewegbar ist.

7. Vorrichtung nach Anspruch 6, dadurch gekennzeichnet, daß der Linearantrieb (33) durch die Anzahl der in der Speicherstrecke (10) enthaltenen Deckel (3) zählende Schalter (35 bis 37) steuerbar ist.

8. Vorrichtung nach Anspruch 6, dadurch gekennzeichnet, daß der Linearantrieb (33) durch einen die Position des jeweils vorletzten Deckels vor der festen Begrenzung (30) erfassenden Sensors (38) steuerbar ist.

9. Vorrichtung nach einem der vorangegangenen Ansprüche, dadurch gekennzeichnet, daß die Einrichtung zum Zuführen der Deckel (3) getrieblich mit dem Antrieb der weiteren Fertigungseinheit (26) verbunden ist.

## Claims

1. Device for taking up and conveying container lids or round blanks (3) made from ferromagnetic material from a first production unit (2) and for delivering them to a further production unit (26) with
- a storage section (10) with two parallel magnet arrangements (13, 14) on both sides of a vertical plane of symmetry (18), wherein when the device is in use the clear distance between the magnet arrangements (13, 14) corresponds substantially to the external diameter of the lids (3),
- at least one arrangement (6, 7) for taking up the lids (3) from the first production direction (2) and for vertical delivery of the lids (3) to the storage section (10), and
- an arrangement (22) for removing the lids (3) from the storage section (10) and delivering them to the further production unit (26),
characterised in that
- the storage section (10) is disposed substantially horizontally and is provided with a limit (30, 31) in each longitudinal direction,
- the limit (30) of the storage section (10) adjacent to the arrangement (22) for delivering the lids (3) to the further production unit (26) is constructed as a fixed stop, and
- the limit (31) lying opposite the arrangement (22) for delivering the lids to the further production arrangement (26) is constructed as a stop which is movably guided in the longitudinal direction of the storage section (10).

2. Device as claimed in Claim 1, characterised in that the magnet arrangements (13, 14) consist in each case of U-shaped magnets which are open to the vertical plane of symmetry (18).

3. Device as claimed in Claim 2, characterised in that the U-shaped magnets in each case consist of two rows (15, 16) of magnets which are disposed one above the other, are separated from one another by a strip (17) of antimagnetic material and are connected to one another towards the rear by a yoke plate (19), wherein magnets which are disposed in mirror image to the vertical plane of symmetry (18) and are disposed above or below one another have opposite polarities.

4. Device as claimed in Claim 3, characterised in that each row (15, 16) of magnets is constructed with two magnets which are disposed behind one another - viewed in the transverse direction.

5. Device as claimed in one of Claims 1 to 4, characterised in that the magnet arrangements (13, 14) are covered at least on their side facing the vertical plane of symmetry (18) with a plate (39) of antimagnetic material with a low-friction surface, the clear distance for passage of the lids (3) being given by the plates (39).

6. Device as claimed in one of Claims 1 to 5, characterised in that the movable stop (31) is movable by a linear drive (33).

7. Device as claimed in Claim 6, characterised in that the linear drive (33) is controllable by switches (35 to 37) which count the number of lids (3) contained in the storage section (10).

8. Device as claimed in Claim 6, characterised in that the linear drive (33) is controllable by a sensor (38) which detects the position of the penultimate lid in each case before the fixed limit (30).

9. Device as claimed in one of the preceding claims, characterised in that the arrangement for delivering the lids (3) is connected by means of gearing to the drive for the further production unit (26).

## Revendications

1. Dispositif pour la prise en charge de couvercles de récipients ou de flans (3) en matériau ferromagnétique au niveau d'une première unité de production (2) et pour leur transfert à une autre unité de production (26) avec
- un trajet d'accumulation (10) à deux groupements d'aimants disposés en parallèle (13, 14) des deux côtés d'un plan de symétrie vertical (18), l'écart libre entre les groupements d'aimants (13, 14) correspondant essentiellement au diamètre extérieur des couvercles (3) lors de l'utilisation du dispositif,
- au moins un dispositif (6, 7) pour la prise en charge des couvercles (3) au niveau de la première unité de production (2) et pour l'introduction verticale des couvercle (3) dans le trajet d'accumulation (10) et
- un dispositif (22) pour le prélèvement des couvercles (3) au niveau du trajet d'accumulation (10) et pour leur transfert à l'unité de production suivante (26),
caractérisé en ce que
- le trajet d'accumulation (10) est disposé essentiellement à l'horizontale et est muni de respectivement une limitation (30, 31) dans le sens longitudinal,
- la limitation (30) du trajet d'accumulation (10) adjacente au dispositif (22) destiné au transfert des couvercles (3) à l'unité de production suivante (26) est exécutée en tant que butée fixe et que
- la limitation (31) opposée au dispositif (22) pour le transfert des couvercles dans l'unité de fabrication suivante (26) est exécutée en tant que butée mobile dans le sens longitudinal du trajet d'accumulation (10).

2. Dispositif selon la revendication 1, caractérisé en ce que les groupements d'aimants (13, 14) sont respectivement composés d'aimants en U ouverts sur le côté du plan de symétrie vertical (18).

3. Dispositif selon la revendication 2, caractérisé en ce que les aimants en U sont respectivement composés de deux rangées (15, 16) d'aimants superposées, séparées l'une de l'autre par une barre (17) en matériau antimagnétique et reliées entre elles à l'arrière par une plaque de culasse (19), les aimants disposés symétriquement par rapport au plan de symétrie (18) et disposés l'un au-dessus ou en dessous de l'autre dans le sens vertical étant de polarité opposée.

4. Dispositif selon la revendication 3, caractérisé en ce que chacune des rangées d'aimants (15, 16) est exécutée en tant que rangée double avec deux aimants disposés l'un derrière l'autre, vu transversalement.

5. Dispositif selon l'une quelconque des revendications 1 à 4, caractérisé en ce que les groupements d'aimants (13, 14) sont recouverts d'une tôle (39) en matériau antimagnétique et à surface à frottement réduit au moins sur leur côté orienté vers le plan de symétrie (18), l'écart libre pour le passage des couvercles (3) étant alors défini par les tôles (39).

6. Dispositif selon l'une quelconque des revendications 1 à 5, caractérisé en ce que la butèe mobile (31) peut être déplacée par un entraînement linéaire (33).

7. Dispositif selon la revendication 6, caractérisé en ce que l'entraînement linéaire (33) peut être commandé par des capteurs (35 à 37) qui comptent le nombre de couvercles contenus (3) dans le trajet d'accumulation (10).

8. Dispositif selon la revendication 6, caractérisé en ce que l'entraînement linéaire (33) peut être commandé par un capteur (38) qui saisit la position de l'avant-dernier couvercle respectif avant la butée fixe (30).

9. Dispositif selon l'une quelconque des revendications indiquées ci-dessus, caractérisé en ce que le dispositif pour le transfert des couvercles (3) est relié mécaniquement avec l'entraînement de l'unité de production suivante (26).
